# EUROPEAN PATENT SPECIFICATION

(11) **EP 2 977 664 B1**
(45) Date of publication and mention of the grant of the patent: **28.09.2016**
(21) Application number: 14187808.2
(22) Date of filing: 06.10.2014
(51) Int. Cl.: F16L 55/168, F16L 35/00

(54) **High pressure resistant safety shield for a pipe joint**
Hochdruckfeste Sicherheitsabdeckung für eine Rohrverbindung
Blindage de sécurité résistant à haute pression pour un raccord de tuyau

(30) Priority: 25.07.2014 GB 201413231
(43) Date of publication of application: 27.01.2016
(73) Proprietor: Thermaflue Systems Limited, South Yorkshire DN11 8QA (GB)
(72) Inventor: Gooding, David, Doncaster, South Yorkshire DN11 8QA (GB)
(74) Representative: Franks & Co Limited

(56) References cited:
- GB-A- 2 509 834
- US-A- 3 850 451
- US-B1- 6 298 882

## Description

### Field of the Invention

The present invention relates to a high pressure resistant safety shield for a pipe joint carrying a pressurized fluid or gas.

### Background of the Invention

Over the years, various types of high pressure resistant safety shields have been proposed, such as systems consisting of more shroud members releasably joined to form an enclosed chamber.

CA 2190409 discloses a shield for surrounding or covering a coupling in a pipeline or hose comprising a housing and a notch.

USP 4,403,794 discloses a safety shield for containing and deflecting a fluid leaking from a flanged pipe coupling in the form of an arcuate strip of transparent fluoropolymer.

USP 5,895,076 discloses a hose coupling shroud for enclosing and securing coupled ends of a pair of hoses, particular those of the type used to convey an abrasive media under high pressure.

GB 2509834 A discloses a safety shield for a pipe joint carrying a pressurized fluid or gas, comprising a closeable or sealable pliable body.

### Summary of the Invention

In case of failing pipe joints causing a leak, a spray-out of pressurized, often toxic, corrosive and dangerous liquids and gases can occur. Such spray-outs can have catastrophic effects, in many cases resulting in fire or explosions causing considerable plant down time, capital expenditure and even loss of life. It is an objection of the present invention to prevent such explosions and fires by allowing the pressure to dissipate within the safety shield.

Problems of prior art safety shields include that they are not able to withstand pressures higher than nominal pump transmission pressures, as they do not allow the pressure to dissipate and do not have a central pressure restraining strap. In addition to this, the construction of prior art safety shields is highly specialized and technically complex. Another disadvantage of the prior art safety shields is that they are relatively expensive.

The present invention overcomes these problems by providing a safety shield comprising a pliable body, which is able to withstand high hydraulic pressures exceeding 10,000 psi and absorb a fluid or gas burst failure up to 69,000 mm² and, at the same time, is easy to be made, and relatively inexpensive.

The invention resides broadly in a shield for a pipe joint carrying a pressurized fluid or gas, comprising a closable or sealable pliable body of a length and a width to be wrapped around the pipe joint, wherein the width is larger in the middle of the pliable body than at its end parts and at least three sealing or closing means located on central and end parts of the body, characterized in that the closable or sealable pliable body comprises an inner layer made of woven material to withstand high impact forces, an outer layer made of polymer coated glass cloth, the outer layer located on the central and end parts of the body, at least two intermediate parts made of a macromolecular material located at the end parts of the body and an intermediate layer of stainless steel located in the central part of the body.

According to another aspect of the present invention, there is provided a shield for a pipe joint carrying a pressurized fluid or gas as defined above wherein the polymer is chemical resistant. Materials known in the art may be used, such as silicone, PTFE, PVC, PEEK, PEI or neoprene rubber.

According to another aspect of the present invention, there is provided a shield for a pipe joint carrying a pressurized fluid or gas as defined above, wherein the macromolecular material is chemical and heat resistant. Materials known in the art may be used, such as PBI, a fluorinated polymer or a fluorinated copolymer, such as perfluoro (ethylene-propylene) copolymer.

According to another aspect of the present invention, there is provided a shield for a pipe joint carrying a pressurized fluid or gas as defined above, wherein there are two parts made of the macromolecular material as defined above.

According to another aspect of the present invention, there is provided a shield for a pipe joint carrying a pressurized fluid or gas as defined above, wherein the pipe joint is a flange, a valve or a coupling.

According to another aspect of the present invention, there is provided a shield for a pipe joint carrying a pressurized fluid or gas as defined above, wherein the strap comprises a strip made of stainless steel.

According to another aspect of the present invention, there is provided a shield for a pipe joint carrying a pressurized fluid or gas as defined above, wherein the inner part is made of woven ballistic para-aramid synthetic fiber cloth.

According to another aspect of the present invention, there is provided a shield for a pipe joint carrying a pressurized fluid or gas as defined above, wherein the inner part is made of woven stainless steel mesh.

According to another aspect of the present invention, there is provided a system comprising the shield for a pipe joint carrying a pressurized fluid or gas as defined above and a pipe joint, wherein the closeable or sealable pliable body is fixed to the pipe joint with the at least three sealing or closing means.

According to another aspect of the present invention, there is provided a system as defined above, wherein the closeable or sealable pliable body is fixed to the pipe joint with three sealing or closing means.

According to another aspect of the present invention, there is provided a system as defined above, wherein there are a central sealing or closing means and two end part sealing or closing means.

According to another aspect of the present invention, there is provided a system as defined above, wherein the sealing or closing means are hook and loop fasteners.

According to another aspect of the present invention, there is provided a system as defined above, wherein the central sealing or closing means comprises a strip made of polymer coated glass cloth and a steel slide buckle. The polymer is any chemical resistant polymer. Materials known in the art may be used, such as silicone, PTFE, PVC, PEEK, PEI or neoprene rubber. This enables the sealing or closing means to be pulled tight and resist the force of the fluid or the gas hitting the shield.

Embodiments described herein may have an advantage that the shield covers entirely a pipe joint and its pipe connections.

Another advantage is that the shield for a pipe joint carrying a pressurized fluid or gas can withstand high hydraulic pressures exceeding 10,000 psi and absorb fluid or gas burst failure up to 69,000 mm². This is achieved by allowing the pressure to dissipate and the fluid or the gas to escape at zero pressure via the end parts of the closeable or sealable pliable body, which is achieved by using a suitable and advantageous combination of materials of single parts of the shield and by an overall construction of the shield.

Another advantage is that the closeable or sealable pliable body can be easily fixed to the pipe joint by closing or sealing means known in the art.

Another advantage is that the shield for a pipe joint of the present invention is easy to be made and is relatively inexpensive.

Another advantage of the shield for a pipe joint of the present invention is that the material of the inner part is woven and therefore forms a barrier for liquid or gas under high pressure. The inner part is designed to withstand high impact forces. The liquid or gas that does not penetrate is dissipated, changes its direction and loses its velocity. The parts made of a macromolecular material and the part made of stainless steel then act as reliable barriers for the liquid or gas which have penetrated. In other words: the two parts cover the areas where a burst is likely to occur. In addition to this, the stainless steel part is flame retardant. The outer part made of polymer coated glass cloth acts as a waterproof, flame retardant and weather resistant barrier.

Another advantage is that the central closing or sealing means resists the force of the impact so that the shield does not open when it is exposed to high pressurized liquids or gases.

Another advantage is that the end part closing or sealing means act as sealing or closing means allowing excess pressure to dissipate out.

Other aspects are as set out in the claims herein.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 illustrates a shield for a pipe joint carrying a pressurized fluid or gas, comprising a closeable or sealable pliable body and three closing or sealing means.
Figure 2 illustrates a shield for a pipe joint carrying a pressurized fluid or gas, comprising a closeable or sealable pliable body and three closing or sealing means, wherein the body is closed by means of the closing or sealing means.
Figure 3 illustrates a side view of the shield for a pipe joint carrying a pressurized fluid or gas.
Figure 4 illustrates a shield for a pipe joint carrying a pressurized fluid or gas and a pipe joint.
Figure 5 illustrates a body of a shield for a pipe joint carrying a pressurized fluid or gas fixed to the pipe joint, wherein the body is closed by means of closing or sealing means.
Figure 6 illustrates a shield for a pipe joint carrying a pressurized fluid or gas showing sections A-A, B-B and C-C.
Figure 7 illustrates a cross section A-A of a closeable or sealable pliable body of a shield for a pipe joint carrying a pressurized fluid or gas.
Figure 8 illustrates a cross section B-B of a closeable or sealable pliable body of a shield for a pipe joint carrying a pressurized fluid or gas.
Figure 9 illustrates a cross section C-C of a closeable or sealable pliable body of a shield for a pipe joint carrying a pressurized fluid or gas.

### Detailed Description of the Embodiments

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

There will now be described several different embodiments and variations of a shield for a pipe joint.

In this specification, the term "aramid" is used to describe any of a class of synthetic polyamides that are formed from aromatic monomers.

In this specification, the term "macromolecular material" is used to describe a material comprising at least one macromolecule.

In this specification, the term "macromolecule" is used to describe a very large molecule created by polymerization of smaller subunits.

In this specification, the term "woven ballistic para-aramid synthetic fiber cloth" is used to describe woven bulletproof para-aramid synthetic fiber cloth.

In this specification, the term "neoprene" is used to describe a synthetic rubber made by the polymerization of chloroprene.

In this specification, the term "PVC" is used to describe polyvinylchloride.

In this specification, the term "PTFE" is used to describe polytetrafluoroethylene.

In this specification, the term "PEEK" is used to describe poly (ether ketone).

In this specification, the term "PEI" is used to describe polyetherimide.

In this specification, the term "PBI" is used to describe polybenzimidazole.

In this specification, the term "fluorinated polymer" is used to describe a polymer comprising fluorine.

In this specification, the term "fluorinated copolymer" is used a copolymer comprising fluorine.

In this specification, the term "perfluoro (ethylene- propylene) copolymer" is used to describe a copolymer of hexafluoropropylene and tetrafluoroethylene.

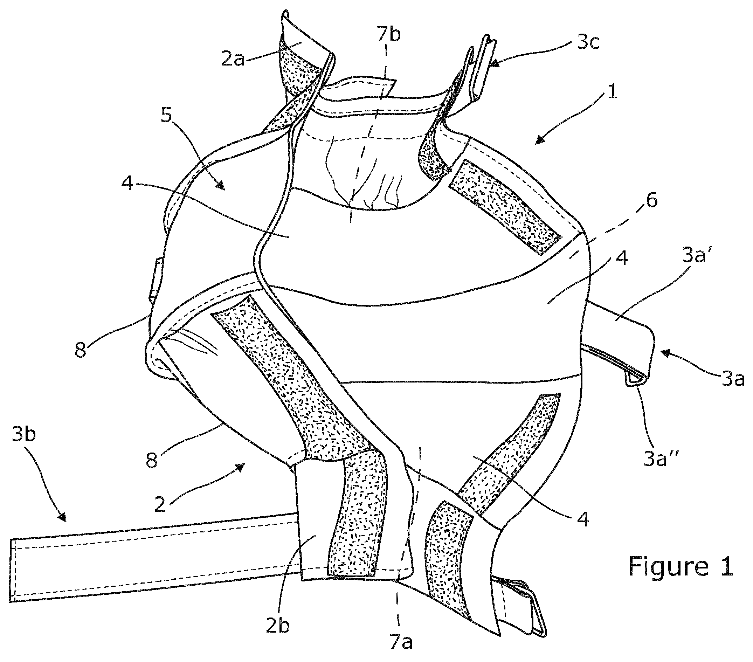

At Figure 1 it is shown a shield (1) for a pipe joint carrying a pressurized fluid or gas, comprising a closeable or sealable pliable body (2) of a length and a width to be wrapped around the pipe joint, wherein the width is larger in the middle of the pliable body than at its end parts (2a) and (2b) and three sealing or closing means (3a), (3b) and (3c), the closing means (3a) comprising a strip (3a') and a steel slide buckle (3a"), the closeable or sealable pliable body (2) comprising an inner part (4), a strap (5), comprising a strip (6) (hidden in the view), two parts (7a) and (7b) (hidden in the view) and an outer part (8).

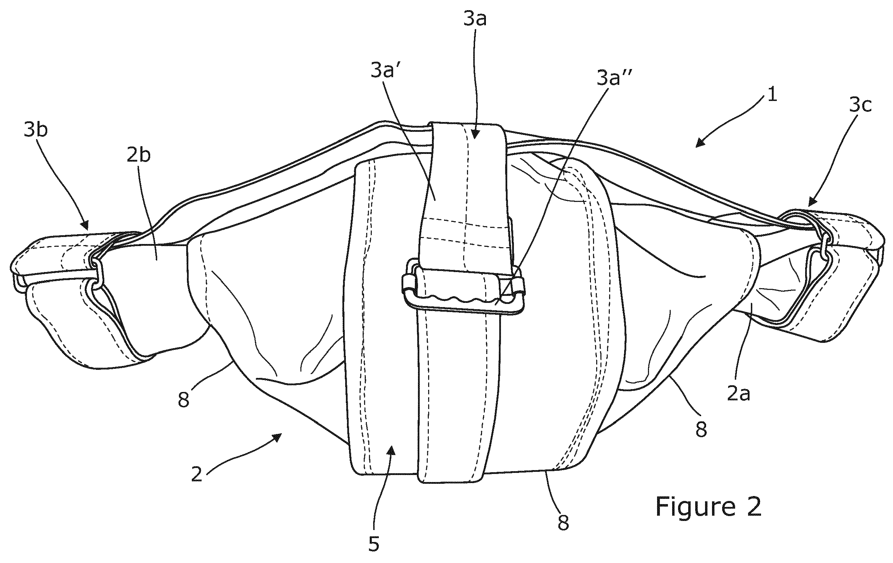

At figure 2 it is shown a shield (1) for a pipe joint comprising a closeable or sealable pliable body (2) of a length and a width to be wrapped around the pipe joint, wherein the width is larger in the middle of the pliable body than at its end parts (2a) and (2b) and three sealing or closing means (3a), (3b) and (3c), the closing means (3a) comprising a strip (3a') and a steel slide buckle (3a"), the closeable or sealable pliable body (2) comprising a strap (5) and an outer part (8), wherein the closeable or sealable pliable body is closed by means of the closing or sealing means.

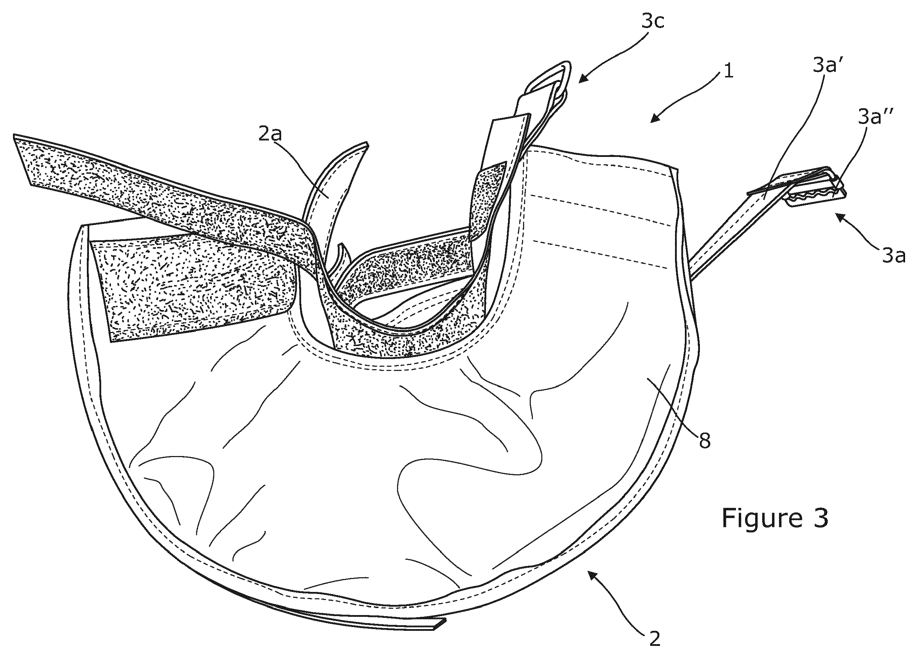

At figure 3 it is shown a side view of a shield (1) for a pipe joint comprising a closeable or sealable pliable body (2) of a length and a width to be wrapped around the pipe joint, wherein the width is larger in the middle of the pliable body than at its end parts and two sealing or closing means (3a) and (3c), the closing means (3a) comprising a strip (3a') and a steel slide buckle (3a"), the closeable or sealable pliable body (2) comprising an outer part (8) and an end part (2a).

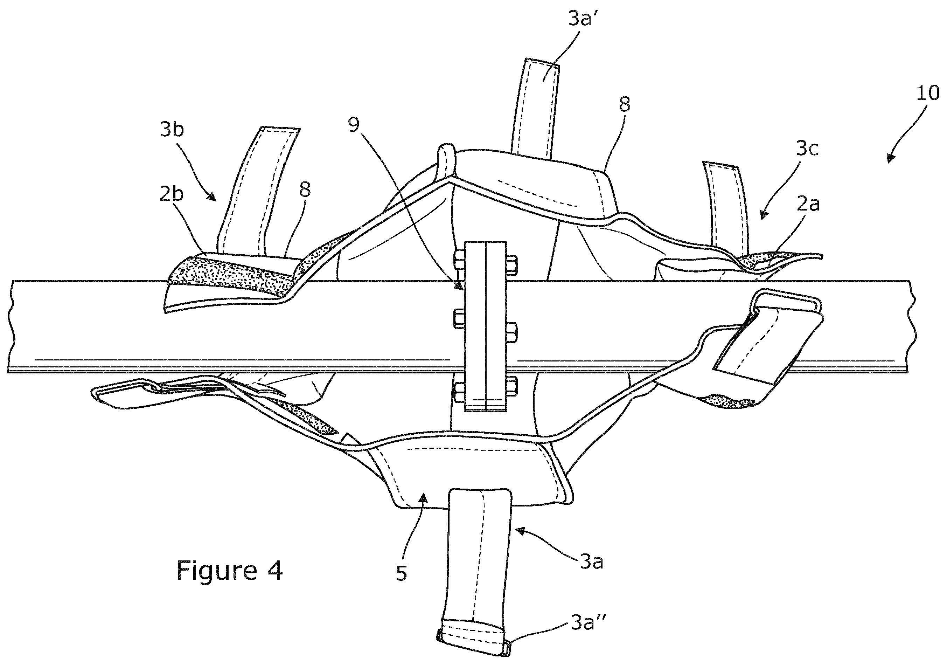

At figure 4 it is shown a system (10) comprising a pipe joint (9) and a shield for a pipe joint comprising a closeable or sealable pliable body of a length and a width to be wrapped around the pipe joint (9), wherein the width is larger in the middle of the pliable body than at its end parts (2a) and (2b) and three sealing or closing means (3a), (3b) and (3c), the closing means (3a) comprising a strip (3a') and a steel slide buckle (3a"), the closeable or sealable pliable body comprising a strap (5) and an outer part (8).

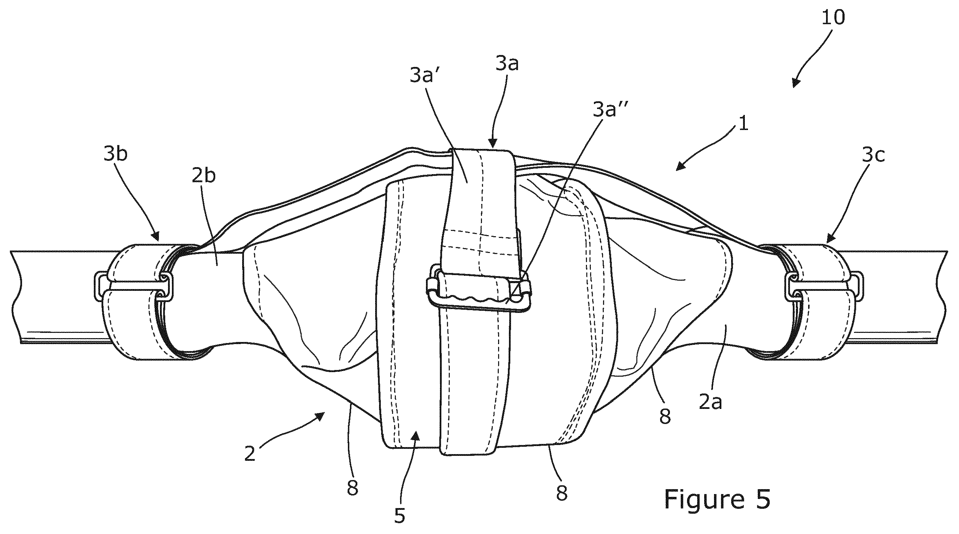

At figure 5 it is shown a system (10) comprising a shield (1) for a pipe joint comprising a closeable or sealable pliable body (2) of a length and a width to be wrapped around the pipe joint, wherein the width is larger in the middle of the pliable body than at its end parts (2a) and (2b) and three sealing or closing means (3a), (3b) and (3c), the closing means (3a) comprising a strip (3a') and a steel slide buckle (3a"), the closeable or sealable pliable body (2) comprising a strap (5) and an outer part (8), wherein the pliable body (2) is fixed to the pipe joint by means of the closing or sealing means.

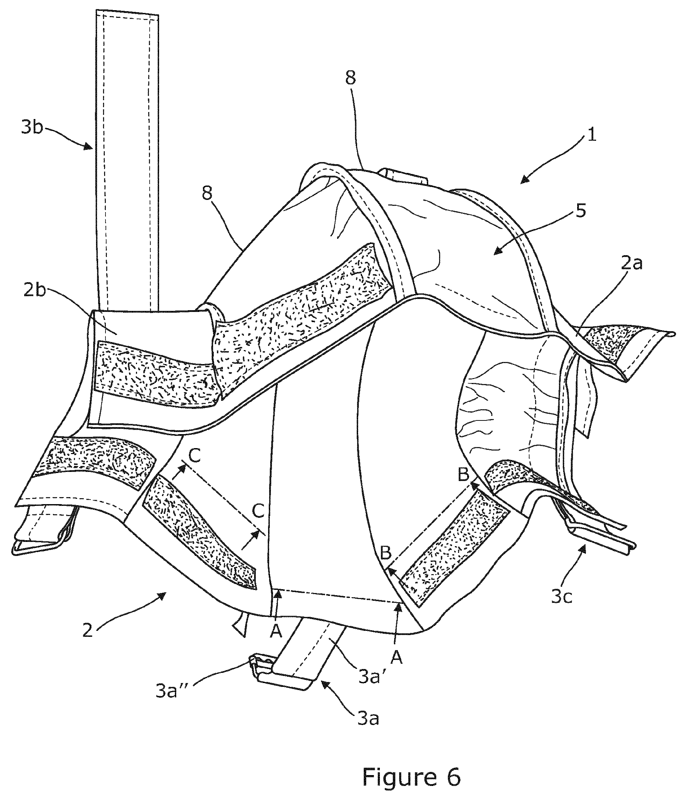

At Figure 6 it is shown a shield (1) for a pipe joint carrying a pressurized fluid or gas, comprising a closeable or sealable pliable body (2) of a length and a width to be wrapped around the pipe joint, wherein the width is larger in the middle of the pliable body than at its end parts (2a) and (2b) and three sealing or closing means (3a), (3b) and (3c), the closing means (3a) comprising a strip (3a') and a steel slide buckle (3a"), the closeable or sealable pliable body (2) comprising a strap (5) and an outer part (8), wherein the figure shows sections A-A, B-B and C-C of the closeable or sealable pliable body.

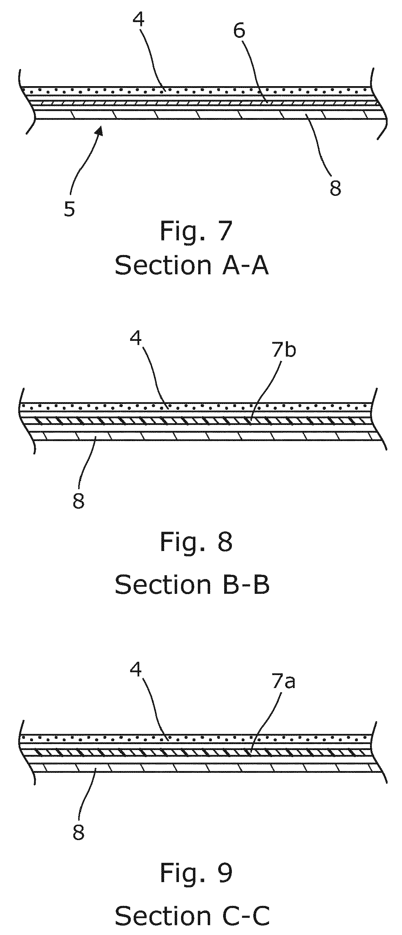

At Figure 7 it is shown a cross-section A-A of a closeable or sealable pliable body of a shield for a pipe joint carrying a pressurized fluid or gas, wherein the cross section shows a strap (5) comprising an inner part (4), a strip (6) made of stainless steel and an outer part (8).

At Figure 8 it is shown a cross-section B-B of a closeable or sealable pliable body of a shield for a pipe joint carrying a pressurized fluid or gas, wherein the cross section shows an inner part (4), a part (7b) made of a macromolecular material and an outer part (8).

At Figure 9 it is shown a cross-section C-C of a closeable or sealable pliable body of a shield for a pipe joint carrying a pressurized fluid or gas, wherein the cross section shows an inner part (4), a part (7a) made of a macromolecular material and an outer part (8).

## Claims

1. A shield (1) for a pipe joint carrying a pressurized fluid or gas, comprising a closeable or sealable pliable body (2) of a length and a width to be wrapped around the pipe joint, wherein the width is larger in the middle of the pliable body than at its end parts (2a) and (2b) and at least three sealing or closing means (3), located on central and end parts of the body (2) **characterized in that** the closeable or sealable pliable body (2) comprises an inner part (4) made of woven material to withstand high impact forces, an outer part (8) made of polymer coated glass cloth, the outer part (8) located on the central and end parts of the body (2), at least two intermediate parts (7) made of a macromolecular material located at the end parts of the body (2) and an intermediate strip (6) of stainless steel located in the central part of the body (2).

2. A shield (1) for a pipe joint carrying a pressurized fluid or gas according to claim 1, wherein the polymer is silicone, PTFE, PVC, PEEK, PEI or neoprene rubber.

3. A shield (1) for a pipe joint carrying a pressurized fluid or gas according to any one of claims 1-2, wherein the macromolecular material is PBI, a fluorinated polymer or a fluorinated copolymer.

4. A shield (1) for a pipe joint carrying a pressurized fluid or gas according to any one of claims 1-3, wherein the at least two intermediate parts comprise two intermediate parts (7a) and (7b) made of perfluoro (ethylene-propylene) copolymer.

5. A shield (1) for a pipe joint carrying a pressurized fluid or gas according to any one of claims 1-4, wherein the pipe joint is a flange, a valve or a coupling.

6. A shield (1) for a pipe joint carrying a pressurized fluid or gas according to any one of claims 1-5, whereby the inner part (4) is made of woven ballistic para-aramid synthetic fiber cloth.

7. A shield (1) for a pipe joint carrying a pressurized fluid or gas according to any one of claims 1-5, whereby the inner part (4) is made of woven stainless steel mesh.

8. A system (10) comprising the shield (1) for a pipe joint carrying a pressurized fluid or gas according to any one of claims 1-7 and a pipe joint (9), wherein the closeable or sealable pliable body (2) is fixed to the pipe joint (9) with the at least three sealing or closing means (3).

9. A system of claim 8, wherein there are a central sealing or closing means (3a) and two end part sealing or closing means (3b) and (3c).

10. A system of claims 8 or claim 9, wherein the sealing or closing means are hook and loop fasteners.

11. A system of any one of claims 8-10, wherein the central sealing or closing means (3a) comprises a strip (3a') made of polymer coated glass cloth and a steel slide buckle (3a").

12. A system of claim 11, wherein the polymer is silicone, PTFE, PVC, PEEK, PEI or neoprene rubber.

## Patentansprüche

1. Abschirmung (1) für eine Rohrverbindung, die ein unter Druck stehendes Fluid oder Gas leitet, umfassend einen schließbaren oder dichtbaren nachgiebigen Körper (2) mit einer Länge und einer Breite, um um die Rohrverbindung gewickelt zu werden, wobei die Breite in der Mitte des nachgiebigen Körpers größer ist als an seinen Endteilen (2a) und (2b), und mindestens drei Dicht- oder Schließmittel (3), die sich an mittleren und Endteilen des Körpers (2) befinden, **dadurch gekennzeichnet, dass** der schließbare oder dichtbare nachgiebige Körper (2) Folgendes umfasst: einen inneren Teil (4), der aus gewebtem Material hergestellt ist, um hohen Stoßkräften zu widerstehen, einen äußeren Teil (8), der aus polymerbeschichtetem Glasfaserstoff hergestellt ist, wobei sich der äußere Teil (8) an dem mittleren und den Endteilen des Körpers (2) befindet, mindestens zwei Zwischenteile (7), die aus einem makromolekularen Material hergestellt sind, die sich an den Endteilen des Körpers (2) befinden und einen Zwischenstreifen (6) aus Edelstahl, der sich in dem mittleren Teil des Körpers (2) befindet.

2. Abschirmung (1) für eine Rohrverbindung, die ein unter Druck stehendes Fluid oder Gas leitet, nach Anspruch 1, wobei es sich bei dem Polymer um Silikon, PTFE, PVC, PEEK, PEI oder Neoprenkautschuk handelt.

3. Abschirmung (1) für eine Rohrverbindung, die ein unter Druck stehendes Fluid oder Gas leitet, nach einem der Ansprüche 1-2, wobei es sich bei dem makromolekularen Material um PBI, ein fluoriertes Polymer oder ein fluoriertes Copolymer handelt.

4. Abschirmung (1) für eine Rohrverbindung, die ein unter Druck stehendes Fluid oder Gas leitet, nach einem der Ansprüche 1-3, wobei die mindestens zwei Zwischenteile zwei aus Perfluor-(Ethylen-Propylen)-Copolymer hergestellte Zwischenteile (7a) und (7b) umfassen.

5. Abschirmung (1) für eine Rohrverbindung, die ein unter Druck stehendes Fluid oder Gas leitet, nach einem der Ansprüche 1-4, wobei es sich bei der Rohrverbindung um einen Flansch, ein Ventil oder eine Kupplung handelt.

6. Abschirmung (1) für eine Rohrverbindung, die ein unter Druck stehendes Fluid oder Gas leitet, nach einem der Ansprüche 1-5, wobei der innere Teil (4) aus gewebtem ballistischen Para-Aramid-Kunstfaserstoff hergestellt ist.

7. Abschirmung (1) für eine Rohrverbindung, die ein unter Druck stehendes Fluid oder Gas leitet, nach einem der Ansprüche 1-5, wobei der innere Teil (4) aus gewebtem Edelstahlnetzmaterial hergestellt ist.

8. System (10), das die Abschirmung (1) für eine Rohrverbindung, die ein unter Druck stehendes Fluid oder Gas leitet, nach einem der Ansprüche 1-7 und eine Rohrverbindung (9) umfasst, wobei der schließbare oder dichtbare nachgiebige Körper (2) mit den mindestens drei Dicht- oder Schließmitteln (3) an der Rohrverbindung (9) fixiert ist.

9. System nach Anspruch 8, wobei ein mittleres Dicht- oder Schließmittel (3a) und zwei Endteil-Dicht oder -Schließmittel (3b) und (3c) vorgesehen sind.

10. System nach Anspruch 8 oder Anspruch 9, wobei es sich bei den Dicht- oder Schließmitteln um Klettverschlüsse handelt.

11. System nach einem der Ansprüche 8-10, wobei das mittlere Dicht- oder Schließmittel (3a) einen aus polymerbeschichtetem Glasfaserstoff hergestellten Streifen (3a') und eine Stahl-Gleitschnalle (3a") umfasst.

12. System nach Anspruch 11, wobei es sich bei dem Polymer um Silikon, PTFE, PVC, PEEK, PEI oder Neoprenkautschuk handelt.

## Revendications

1. Un écran (1) pour un raccord de tube convoyant un fluide ou gaz pressurisé, comprenant un corps souple fermable ou scellable (2) d'une longueur et d'une largeur propre à être enveloppé autour du raccord de tube, dans lequel la largeur est supérieure au milieu du corps souple par rapport au niveau de ses extrémités (2a) et (2b) et au moins trois moyens de scellement ou de fermeture (3) situés sur des parts centrale et d'extrémité, **caractérisé en ce que** le corps souple fermable ou scellable (2) comprend une part interne (4) réalisée en matériau tissé propre à subir des forces d'impact importantes, une part externe (8) réalisée en tissu de verre recouvert de polymère, la part externe (8) située sur les parts centrale et d'extrémité du corps (2), au moins deux parts intermédiaires (7) réalisées en matériau macromoléculaire situées au niveau des parts d'extrémité du corps (2) et une lame intermédiaire (6) d'acier inoxydable situé dans la part centrale du corps (2).

2. Un écran (1) pour un raccord de tube convoyant un fluide ou gaz pressurisé selon la revendication 1, dans lequel le polymère est du silicone, du polytétrafluoroéthylène (PTFE), du polyvinylchlorure (PVC), du polyéther éther cétone (PEEK), du polyéthérimide (PEI) ou du caoutchouc néoprène.

3. Un écran (1) pour un raccord de tube convoyant un fluide ou gaz pressurisé selon l'une des revendications 1-2, dans lequel le matériau macromoléculaire est du paraphénylène benzobisimidiazole (PBI), un polymère fluoré ou un copolymère fluoré.

4. Un écran (1) pour un raccord de tube convoyant un fluide ou gaz pressurisé selon l'une des revendications 1-3, dans lequel les au moins deux parts intermédiaires comprennent deux parts intermédiaires (7a) et 7(b) réalisées en copolymère perfluoré éthylène/propylène.

5. Un écran (1) pour un raccord de tube convoyant un fluide ou gaz pressurisé selon l'une des revendications 1-4, dans lequel le raccord de tube est une bride, une soupape ou un couplage.

6. Un écran (1) pour un raccord de tube convoyant un fluide ou gaz pressurisé selon l'une des revendications 1-5, dans lequel la part interne (4) est réalisée en tissu balistique de fibres synthétiques para-aramides.

7. Un écran (1) pour un raccord de tube convoyant un fluide ou gaz pressurisé selon l'une des revendications 1-5, dans lequel la part interne (4) est réalisée en tissu d'acier inoxydable maillé.

8. Un système (10) comprenant l'écran (1) pour un raccord de tube convoyant un fluide ou gaz pressurisé selon l'une des revendications 1-7 et un raccord de tube (9), dans lequel le corps souple fermable ou scellable (2) est fixé au raccord de tube (9) avec les au moins trois moyens de scellement ou de fermeture (3).

9. Un système selon la revendication 8, dans lequel il y a un moyen de scellement ou de fermeture central (3a) et deux moyens de scellement ou de fermeture de part d'extrémité (3b) et (3c).

10. Un système selon la revendication 8 ou la revendication 9, dans lequel les moyens de scellement ou de fermeture sont des fermoirs boucle/crochet.

11. Un système selon l'une des revendications 8-10, dans lequel le moyen de scellement ou de fermeture central (3a) comprend une lame (3a') réalisée en tissu de verre recouvert de polymère et un fermoir à boucle en acier (3a").

12. Un système selon la revendication 11, dans lequel le polymère est du silicone, du polytétrafluoroéthylène (PTFE), du polyvinylchlorure (PVC), du polyéther éther cétone (PEEK), du polyéthérimide (PEI) ou du caoutchouc néoprène.
